# EUROPEAN PATENT APPLICATION

(11) **EP 1 584 661 A1**
(43) Date of publication of application: **12.10.2005**
(21) Application number: 04700529.3
(22) Date of filing: 07.01.2004
(51) Int. Cl.: C08L 101/00, C08K 3/16, C08K 3/34, C08K 9/00, C09K 3/10

(54) **CROSS-LINKED ELASTOMER COMPOSITION AND FORMED PRODUCT COMPOSED OF SUCH CROSS-LINKED ELASTOMER COMPOSITION**

(30) Priority: 10.01.2003 JP 2003005072
(71) Applicant: DAIKIN INDUSTRIES, LTD., Osaka 530-8323 (JP)
(72) Inventor: HIGASHINO, Katsuhiko, c/o Yodogawa-seisakusho, Settsu-shi, Osaka 566-8585 (JP); NOGUCHI, Tsuyoshi, c/o Yodogawa-seisakusho, Settsu-shi, Osaka 566-8585 (JP)
(74) Representative: HOFFMANN EITLE
(86) International application number: PCT/JP2004/000049
(87) International publication number: WO 2004/063281

(57) **Abstract**

There is provided a crosslinkable elastomer composition, which has small decrease in weight to all of high concentration F radical irradiation, O₂ plasma treatment and fluorine plasma treatment which are conducted in a semiconductor manufacturing process and significant plasma resistance, and a molded article comprising the crosslinkable elastomer composition.

## Description

### TECHNICAL FIELD

The present invention relates to a crosslinkable elastomer composition, which has small decrease in weight to all plasma treatment of NF₃ plasma treatment, O₂ plasma treatment and fluorine plasma treatment in a semiconductor manufacturing process and significant plasma resistance, and a molded article comprising the crosslinkable elastomer composition, specifically sealing material.

### BACKGROUND ART

Plasma equipment is used in the etching, ashing and chemical vapor deposition (CVD) steps of a semiconductor manufacturing process. In plasma equipment, elastomeric sealing material is used to seal various connecting and movable parts. These sealing materials are required not only to have sealing properties, but also to be able to withstand harsh plasma treatment conditions of high-density (10¹² to 10¹³/cm³), as semiconductors are becoming microscopic and substrate wafers are becoming large, and to not contaminate the semiconductor, in which extremely precise processing is required. As an elastomeric material of sealing material that can handle such demands, a material in which an organic or inorganic filler is compounded to a crosslinkable fluroine elastomer is used.

In order to clean the chamber of CVD equipment after the thin film forming process by CVD, cleaning is conducted by high-density F radical using NF₃ remote plasma. Also, in the etching and ashing steps of a semiconductor manufacturing process, O₂ plasma treatment and fluorine plasma treatment are conducted. Consequently, the sealing material is required to have resistance to all of NF₃ plasma treatment, O₂ plasma treatment and fluorine plasma treatment.

However, in a material wherein fillers that are conventionally used or suggested are used, such as carbon black, silica (for example, see Japanese Patent No. 2783576 and Japanese Patent No. 2658198) polytetrafluoroethylene (PTFE) powder, titanium oxide powder, clay, talc and barium sulfate, the material cannot have sufficient resistance to all of NF₃ plasma treatment, O₂ plasma treatment and fluorine plasma treatment.

As a filler that is stable to NF₃ plasma treatment, O₂ plasma treatment and fluorine plasma treatment, alumina and an imide filler have been suggested (for example, see WO 00/64980, WO 01/32782). Alumina has the advantage of resistance to both O₂ plasma and fluorine plasma. However, there is the problem that alumina accelerates degradation of a fluorine elastomer under NF₃ remote plasma. On the other hand, an imide filler exhibits excellent resistance under NF₃ remote plasma, but lacks resistance under O₂ plasma.

Consequently, an elastomer composition having resistance to all of NF₃ plasma treatment, O₂ plasma treatment and fluorine plasma treatment is not yet known.

### DISCLOSURE OF INVENTION

The present invention aims to provide a crosslinkable elastomer composition, which has small decrease in weight to all plasma treatment of NF₃ plasma treatment, O₂ plasma treatment and fluorine plasma treatment which are conducted in a semiconductor manufacturing process and significant plasma resistance, and a molded article comprising the crosslinkable elastomer composition.

That is, the present invention relates to a crosslinkable elastomer composition for plasma process comprising a crosslinkable elastomer and a carbon fluoride filler.

The crosslinkable elastomer composition can contain a silicic compound inorganic filler and/or a filler comprising a synthetic polymer having a thermally and chemically stable aromatic ring in the main chain.

The synthetic polymer having a thermally and chemically stable aromatic ring in the main chain is preferably a synthetic polymer having an amide bond or an imide bond in the main chain.

The silicic compound inorganic filler preferably has average particle size of at most 0.5 µm.

The filler comprising the synthetic polymer having a thermally and chemically stable aromatic ring in the main chain preferably has specific surface area of at least 0.5 m²/g.

The carbon fluoride filler is preferably heat treated at 300 to 550°C in advance.

The crosslinkable elastomer is preferably a perfluoro elastomer.

Furthermore, the present invention relates to a molded article and a sealing material for plasma process comprising the crosslinkable elastomer composition.

### BEST MODE FOR CARRYING OUT THE INVENTION

The crosslinkable elastomer composition of the present invention contains a crosslinkable elastomer and a carbon fluoride filler.

The carbon fluoride filler used in the present invention has poly(carbon monofluoride) as the main component and is preferably prepared by fluorinating a carbon material with fluorine gas.

As the carbon material, carbon black is suitable. As the carbon black, commercially available products can be used, such as furnace black (Asahi #5 available from Asahi Carbon Co., Ltd.), channel black (Raven 7000 available from Columbia Carbon), thermal black (Cebacarbo MT-C 1 available from Columbia Carbon) and acetylene black (Denka Black available from Denki Kagaku Kogyo K.K.).

The carbon fluoride is obtained by contacting the carbon material with fluorine gas preferably at 200 to 600°C, more preferably 300 to 500°C. When the temperature is lower than 200°C, problems occur, such as progression of the fluorination reaction is slow, the fluorination degree has difficulty rising and thermal stability is insufficient. When the temperature is higher than 600°C, thermal decomposition tends to occur and the yield of the obtained carbon fluoride becomes low. Also, at times, thermal decomposition reaction occurs suddenly, leading to explosion, and therefore, attention must be carefully paid.

The fluorine gas used in the reaction can be diluted with inert gas such as nitrogen, argon, helium and carbon tetrafluoride and also, can contain hydrogen fluoride.

The fluorination reaction can be conducted under normal pressure and also under reduced pressure or applied pressure. The conditions such as fluorination reaction time and fluorine gas flow rate can be adjusted accordingly depending on the reactivity of the carbon material, which is the raw material, and fluorine and the desired atomic ratio of fluorine atoms to carbon atoms (hereinafter referred to as F/C).

The F/C of the carbon fluoride filler used in the present invention is preferably at least 0.1, more preferably 0.1 to 1.2. When F/C is less than 0.1, plasma resistance, which is an object of the present invention, is not exhibited. However, in the present invention, carbon fluoride fillers having different F/ C can be mixed and used and in such a case, a carbon fluoride filler having F/C of less than 0.1 can be mixed with a carbon fluoride filler having F/C of at least 0.1 and used.

In the present invention, F/C of carbon fluoride filler is measured in the manner mentioned below.

A carbon fluoride particle is burned with a combustion improver Na₂O₂ and a polyethylene film in a flask filled with oxgen, and generated hydrogen fluoride is absorbed to water. An amount of generated hydrogen fluoride is measured by using a fluoride ion meter (ION ANALYZER 901 available from Orion Corporation). F/C that is the atomic ratio of fluorine atoms to carbon atoms is calculated from the obtained value, as all the residual of carbon fluoride is carbon. This value is considered as the F/ C of carbon fluoride.

The number average particle size of the carbon fluoride filler used in the present invention is preferably 0.01 to 50 µm, more preferably 0.01 to 20 µm. When the number average particle size is less than 0.01 µm, secondary agglomeration tends to occur and uniformly dispersing in the crosslinkable elastomer composition when using tends to become difficult. When the number average particle size is larger than 50 µm, dispersibility tends to become poor.

Examples of the carbon fluoride filler used in the present invention are poly(carbon monofluoride) and poly(dicarbon monofluoride).

In the present invention, the carbon fluoride filler is preferably heat treated in advance, preferably at 300 to 550°C, more preferably 350 to 500°C, and then used. When heat treatment is not conducted or conducted at lower than 300°C, the impure gas in the carbon fluoride is not removed and the impure gas tends to degrade the resistance to plasma of the carbon fluoride. When thermal treatment is conducted at a temperature higher than 550°C, thermal decomposition reaction tends to occur.

As the filler, in addition to the carbon fluoride filler, the crosslinkable elastomer composition of the present invention can contain a metal compound inorganic filler and/or an organic polymer compound filler.

Examples of the metal compound inorganic filler are metal oxides such as silicon oxides including silica and glass, titanium oxide and aluminum oxide; metal sulfates such as barium sulfate, calcium sulfate and aluminum sulfate; metal carbonates such as calcium carbonate; metal carbides such as silicon carbide; and metal nitrides such as silicon nitride and aluminum nitride. Of these, particularly, oxides, carbides and nitrides of silicon, which are silicon compound inorganic fillers, are preferable from the viewpoint that these do not largely degrade resistance to NF₃ remote plasma.

From the viewpoint of inhibiting development of foreign matter (particles) in plasma treatment, the average particle of the silicon compound inorganic filler is preferably at most 0.5 µm, more preferably 0.005 to 0.1 µm.

As the organic polymer compound filler, an organic polymer compound having heat resistance (crystal melting point, glass transition temperature or temperature at which weight decreases 5 %) at 200°C or higher, more preferably at 220°C or higher, is preferably used for the reason that sufficient durability can be achieved when used in high temperatures as sealing material in a high temperature thermal treatment apparatus.

Examples of the organic polymer compound filler having heat resistance at 200°C or higher are a resin having a repeating unit containing at least one structural unit X and a resin containing at least one each of a repeating unit having at least one structural unit X and a repeating unit having at least one structural unit Y.

Examples of the structural unit X are carbon single rings such as 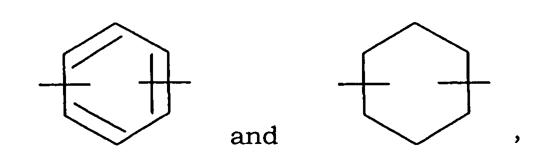 carbon condensed rings such as 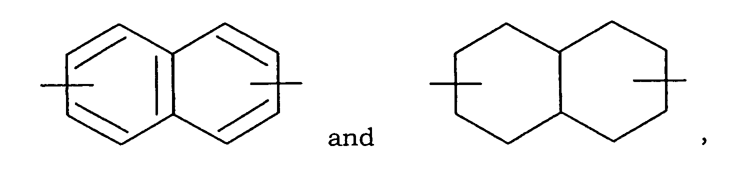 heteromonocycles such as 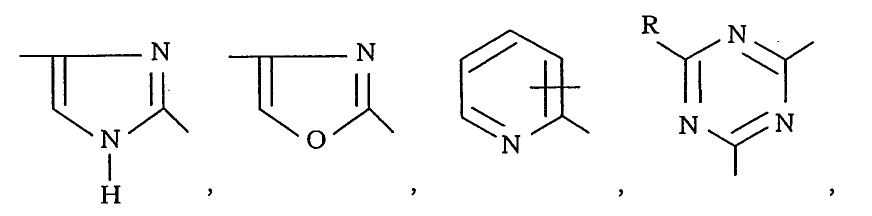 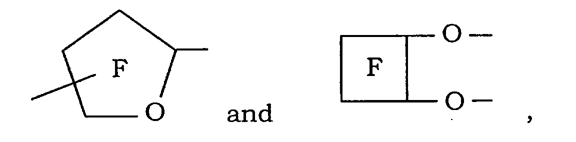 and condensed heterocycles such as 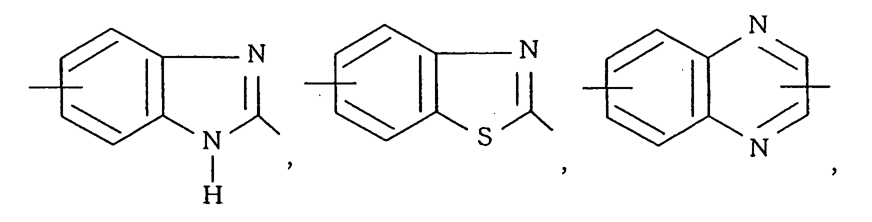 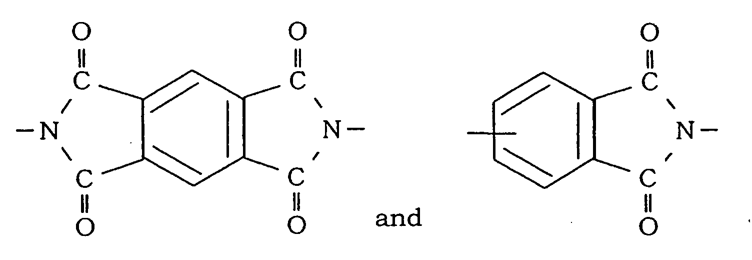 Examples of the structural unit Y are nonconjugated functional groups such as 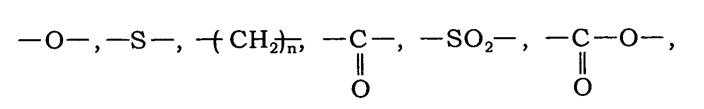 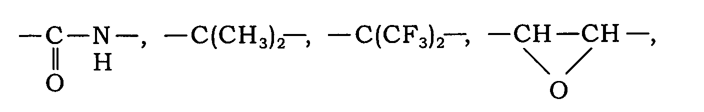 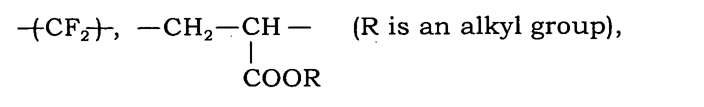 and conjugated functional groups such as

―CH = CH-, -C ≡ C-, -N = N-, -CH = N-.

Specifically, resin having the following repeating units are preferable: 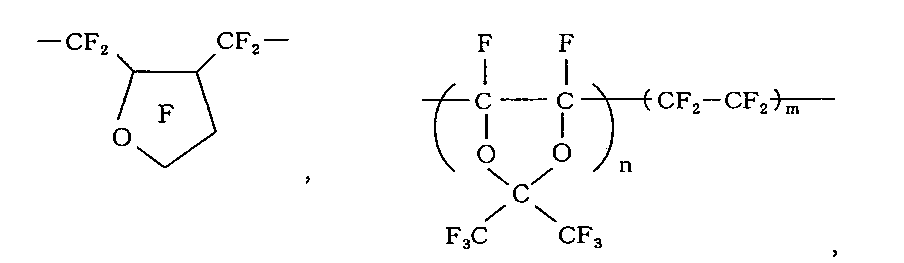 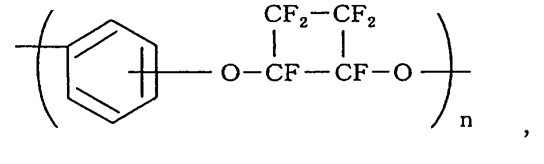 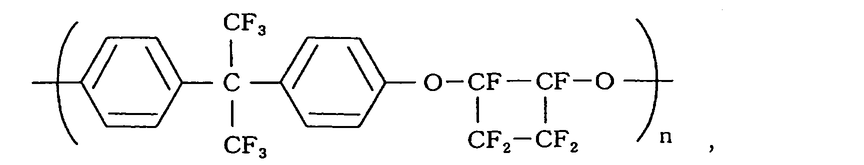 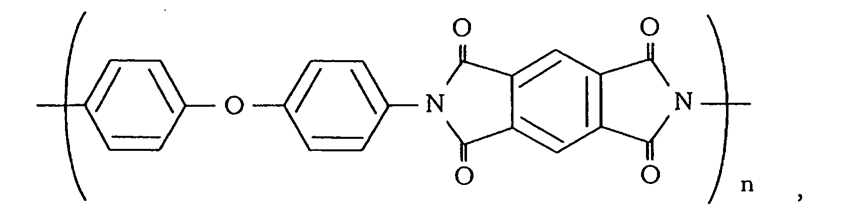 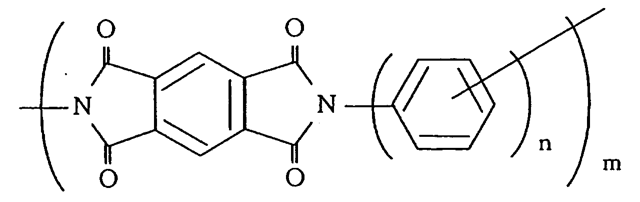 and 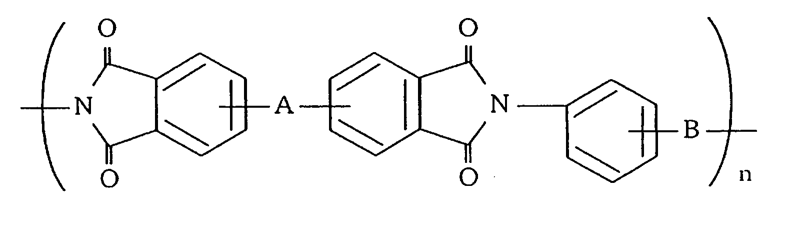 (wherein A is a single bond, -O- or -C(=O)-; B is a single bond, -O-, -S-, -C(=O)-, -CH₂ or -C(CF₃)₂-, m and n are an integer of at least 1). Of these, 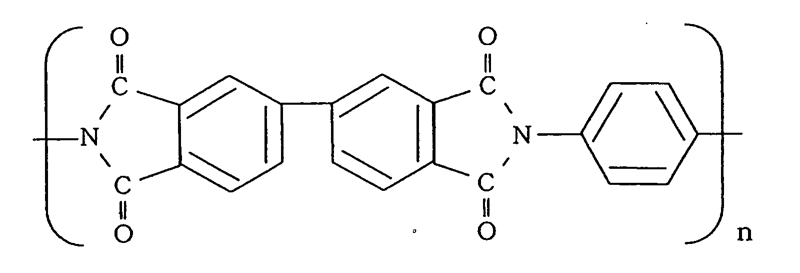 is preferable as plasma resistance is excellent.

Examples of such fillers are imide fillers having an imide structure such as polyimide, poly(amide imide) and poly(ether imide) and organic fillers made of engineering plastic such as polyalylate, polysulfone, poly(ether sulfone), poly(phenylene sulfide), polyether ether ketone and polyoxybenzoate.

Of these, from the viewpoint of heat resistance, low metal content and low out-gas properties, an imide filler having an imide bond is preferable.

Also, as the organic polymer compound filler, fluororesin such as polychlorotrifluoroethylene (PCTFE), polytetrafluoroethylene (PTFE), tetrafluoroethylene-perfluoro(alkylvinylether) copolymer (PFA), tetrafluoroethylene-hexafluoropropylene copolymer (FEP), tetrafluoroethylene-ethylene copolymer (ETFE), poly(vinylidene fluoride) (PVDF) and poly(vinyl fluoride) (PVF) can be used.

In the present invention, among organic polymer compound fillers, a filler comprising a synthetic polymer having a thermally and chemically stable aromatic ring in the main chain is preferably used, from the viewpoint that resistance to various kinds of plasma is excellent.

The specific surface area of the organic polymer compound filler is preferably at least 0.5 m²/g, more preferably at least 2 m²/g, further preferably at least 5 m²/g. When the specific surface area is less than 0.5 m²/g, reinforcing properties are poor and strength and elongation at break tend to decrease more than when a filler is not used at all.

The shape of the organic polymer compound filler is not particularly limited and not only spherical fillers but also scaly fillers can be used. When the filler is spherical, a molded article having low anisotropy is obtained and when the filler is scaly, a molded article having reinforcing properties in a specific direction is obtained.

The particle size of the organic polymer compound filler is preferably at most 4 µm, more preferably at most 2 µm. When the particle size is larger than 4 µm, reinforcing properties are poor and strength and elongation at break tend to decrease more than when a filler is not used at all. When the filler is a scaly filler, the diameter is preferably 0.05 to 4 µm, more preferably at most 2 µm. The thickness is preferably 0.05 to 2 µm, more preferably 0.05 to 1 µm.

At present, the particle size of organic polymer compound fillers that are commercially available are coarse and the specific surface area is quite small. When using in the present invention, the filler must be pulverized to increase the specific surface area. Examples of the method for pulverizing are jet mill pulverizing (dry pulverization) and the method of preparing a slurry by adding a dispersion medium such as water or an organic solvent, applying pressure to the beads mill and liquid and spraying from a nozzle to counter collide (wet pulverization). To obtain a filler having large specific surface area, pulverization is preferably conducted by a combination of wet pulverization and dry pulverization (jet mill).

To the crosslinkable elastomer composition of the present invention, the metal compound inorganic filler or the organic polymer compound filler can be compounded alone or together.

Examples of the crosslinkable elastomer used in the present invention are a fluorine elastomer or a silicone elastomer.

The fluorine elastomer that can suitably be used in the present invention is not particularly limited, as long as it is an elastomer that is conventionally used for sealing material, particularly sealing material for semiconductor manufacturing equipment. Examples of the fluorine elastomer are fluorine rubber (a), thermoplastic fluorine rubber (b) and a rubber composition comprising these fluorine rubbers.

Examples of fluorine rubber (a) are nonperfluoro fluorine rubber (a-1) and perfluoro fluorine rubber (a-2).

The thermoplastic fluorine rubber (b) contains an elastomeric fluorine-containing polymer chain segment and a nonelastomeric fluorine-containing polymer chain segment and examples are fluorine-containing multi-segmented polymer (b-1) in which at least 90 % by mol of the structural units of both the elastomeric fluorine-containing polymer chain segment and the nonelastomeric fluorine-containing polymer chain segment are perhalo olefin, fluorine-containing multi-segmented polymer (b-2) in which at least 90 % by mol of the structural units of the elastomeric fluorine-containing polymer chain segment are perhalo olefin and the nonelastomeric fluorine-containing polymer chain segment contains less than 90 % by mol of perhalo olefin as structural units and fluorine-containing multi-segmented polymer (b-3) in which the elastomeric fluorine-containing polymer chain segment contains less than 90 % by mol of perhalo olefin as structural units and at least 90 % by mol of the structural units of the elastomeric fluorine-containing polymer chain segment are perhalo olefin or the nonelastomeric fluorine-containing polymer chain segment contains less than 90 % by mol of perhalo olefin as structural units.

Examples of the nonperfluoro fluorine rubber (a-1) are vinylidene fluoride (VdF) fluorine rubber, tetrafluoroethylene (TFE)/propylene fluorine rubber, tetrafluoroethylene (TFE)/propylene/vinylidene fluoride (VdF) fluorine rubber, ethylene/hexafluoroepropylene (HFP) fluorine rubber, ethylene/hexafluoropropylene (HFP)/vinylidene fluoride (VdF) fluorine rubber, ethylene/hexafluoropropylene (HFP)/tetrafluoroethylene (TFE) fluorine rubber, fluorosilicone fluorine rubber and fluorophosphazene fluorine rubber. These can be used alone or can be used in random combinations as long as the effects of the present invention are not lost.

Vinylidene fluoride fluorine rubber refers to a fluorine-containing elastomeric copolymer comprising 45 to 85 % by mol of vinylidene fluoride and 55 to 15 % by mol of at least one other monomer copolymerizable with vinylidene fluoride, preferably a fluorine-containing elastomeric copolymer comprising 50 to 80 % by mol of vinylidene fluoride and 50 to 20 % by mol of at least one other monomer copolymerizable with vinylidene fluoride.

Examples of the at least one other monomer copolymerizable with vinylidene fluoride are fluorine-containing monomers such as tetrafluoroethylene (TFE), chlorotrifluoroethylene (CTFE), trifluoroethylene, hexafluoropropylene (HFP), trifluoropropylene, tetrafluoropropylene, pentafluoropropylene, trifluorobutene, tetrafluoroisobutene, perfluoro(alkyl vinyl ether) (PAVE) and vinyl fluoride and nonfluorine-containing monomers such as ethylene, propylene and alkyl vinyl ether. These can be used alone or used in random combinations. Of these, tetrafluoroethylene, hexafluoropropylene and perfluoro(alkyl vinyl ether) are preferably used.

Specific examples of rubber are VdF-HFP rubber, VdF-HFP-TFE rubber, VdF-CTFE rubber and VdF-CTFE-TFE rubber.

Tetrafluoroethylene/propylene fluorine rubber refers to a fluorine-containing elastic copolymer comprising 45 to 70 % by mol of tetrafluoroethylene, 55 to 30 % by mol of propylene and 0 to 5 % by mol of a monomer that gives a crosslinking site.

Examples of the monomer that gives a crosslinking site are iodine-containing monomers such as perfluoro(6,6-dihydro-6-iodo-3-oxa-1-hexene) and perfluoro(5-iodo-3-oxa-1-pentene) described in JP-B-5-63482 and JP-A-7-316234, bromine-containing monomers described in JP-A-4-505341 and monomers containing a cyano group monomers containing a carboxyl group and monomers containing an alkoxycarbonyl group described in JP-A-4-505345 and JP-A-5-500070.

These nonperfluoro fluorine rubbers (a-1) can be prepared by the usual method.

An example of perfluoro fluorine rubber (a-2) is a fluorine-containing elastic copolymer comprising tetrafluoroethylene/perfluoro(alkyl vinyl ether)/monomer that gives a crosslinking site. The composition thereof is preferably 45 to 90/10 to 50/0 to 5(% by mol), more preferably 45 to 80/20 to 50/0 to 5, further preferably 53 to 70/30 to 45/0 to 2. When the composition is out of this range, properties of a rubber elastic body are lost and the properties tend to become closer to those of resin.

Examples of the perfluoro(alkyl vinyl ether) in this case are perfluoro(methyl vinyl ether) and perfluoro(propyl vinyl ether). These can be used alone or can be used in random combinations as long as the effects of the present invention are not lost.

Examples of the monomer that gives a crosslinking site are vinylidene fluoride, an iodine or bromine-containing monomer represented by formula (1):

CX¹ ₂ = CX¹-R_{f} ¹CHR¹X² (1)

(wherein X¹ is H, F or CH₃, R_{f}¹ is a fluoroalkylene group, a perfluoroalkylene group, a fluoropolyoxyalkylene group or a perfluoropolyoxyalkylene group, R¹ is H or CH₃, X² is iodine or bromine) and a monomer represented by formula (2):

CF₂ = CFO(CF₂CF(CF₃)O)ₘ(CF₂)ₙ-X³ (2)

(wherein m is an integer of 0 to 5, n is an integer of 1 to 3, X³ is a cyano group, a carboxyl group, an alkoxycarbonyl group or a bromine group). These can be used alone or can be used in random combinations. Particularly, X² of formula (1) is preferably iodine and X³ of formula (2) is preferably a cyano group.

The iodine, the cyano group, the carboxyl group, the alkoxycarbonyl group and the bromine group can function as the crosslinking site.

The perfluoro fluorine rubber (a-2) can be prepared by the usual method.

Specific examples of the perfluoro fluorine rubber (a-2) are fluorine rubbers described in WO 97/24381, JP-B-61-57324, JP-B-4-81608 and JP-B-5-13961.

The fluorine-containing multi-segmented polymer (b-1) which is thermoplastic fluorine rubber (b) is described below.

The elastomeric fluorine-containing polymer chain segment is described. The elastomeric fluorine-containing polymer chain segment imparts flexibility to the polymer and has a glass transition temperature of at most 25°C, preferably at most 0°C. Examples of the perhalo olefin that constitute at least 90 % by mol of the structural units thereof are tetrafluoroethylene, chlorotrifluoroethylene, hexafluoropropylene and perfluorovinylether represented by formula (3):

CF₂ = CFO(CF₂CFYO)ₚ-(CF₂CF₂CF₂O)_{q}-R_{f}² (3)

(wherein Y is F or CF₃, R_{f}² is a perfluoroalkyl group having 1 to 5 carbon atoms, p is an integer of 0 to 5, q is an integer of 0 to 5).

Examples of the structural units other than perhalo olefin that constitute the elastomeric fluorine-containing polymer chain segment are fluorine-containing monomers such as vinylidene fluoride, trifluoroethylene, trifluoropropylene, tetrafluoropropylene, pentafluoropropylene, trifluorobutene, tetrafluoroisobutene and vinyl fluoride and nonfluorine-containing monomer such as ethylene, propylene and alkyl vinyl ether.

A preferable example of the elastomeric fluorine-containing polymer chain segment is an elastic polymer chain comprising tetrafluoroethylene/perfluoro(alkyl vinyl ether)/monomer that gives a crosslinking site. The composition thereof is preferably 50 to 85/50 to 15/0 to 5 (% by mol).

Examples of the monomer that gives a crosslinking site are vinylidene fluoride, iodine or bromine-containing monomers represented by formula (1) or a monomer containing a cyano group represented by formula (2) wherein X³ is a cyano group.

The iodine, bromine and cyano groups can function as the crosslinking site.

The nonelastomeric fluorine-containing polymer chain segment is described below. Examples of the perhalo olefin that constitute at least 90 % by mol of the structural units of the nonelastomeric fluorine-containing polymer chain segment are perhalo olefins such as tetrafluoroethylene, chlorotrifluoroethylene, perfluoro(alkyl vinyl ether), hexafluoropropylene, a compound represented by formula (4):

CF₂ = CF(CF₂)ᵣX⁴ (4)

(wherein r is an integer of 1 to 10, X⁴ is F or Cl) and perfluoro-2-butene.

Examples of the structural units other than perhalo olefin that constitute the nonelastomeric fluorine-containing polymer chain segment are the same as those of the structural units other than perhalo olefin that constitute the elastomeric fluorine-containing polymer chain segment.

A preferable example of the nonelastomeric fluorine-containing polymer chain segment is a nonelastomeric polymer chain comprising 85 to 100 % by mol of tetrafluoroethylene and 0 to 15 % by mol of a compound represented by formula (5):

CF₂ = CF-R_{f} ³ (5)

(wherein R_{f}³ is R_{f}⁴ or -OR_{f}⁴, R_{f}⁴ is a perfluoroalkyl group having 1 to 5 carbon atoms).

The fluorine-containing multi-segmented polymer (b-2) is described below.

The elastomeric fluorine-containing polymer chain segment thereof is the same as that given for fluorine-containing multi-segmented polymer (b-1).

Examples of the structural units of the nonelastomeric fluorine-containing polymer chain segment are vinylidene fluoride, vinyl fluoride, trifluoroethylene, a compound represented by formula (6):

CH₂ = CX⁵-(CF₂)ₛ-X⁵ (6)

(wherein X⁵ is H or F, s is an integer of 1 to 10) and partially fluorinated olefins such as CH₂ = C(CF₃)₂.

Also, monomers that are copolymerizable with these monomers such as ethylene, propylene, vinyl chloride, vinyl ether, vinyl carboxylate and acrylic acid can be used as a copolymerization component.

The fluorine-containing multi-segmented polymer (b-3) is described below.

The elastomeric fluorine-containing polymer chain segment of the fluorine-containing multi-segmented polymer (b-3) is a polymer chain having a glass transition temperature of at most 25°C, preferably at most 0°C.

The elastomeric fluorine-containing polymer chain segment contains less than 90 % by mol of perhalo olefin as structural units. Examples of the structural units other than perhalo olefin are the same structural units as those given for the fluorine-containing multi-segmented polymer (b-1).

The nonelastomeric fluorine-containing polymer chain segment of the fluorine-containing multi-segmented polymer (b-3) is the same as the nonelastomeric fluorine-containing polymer chain segment of the fluorine-containing multi-segmented polymers (b-1) and (b-2), preferably the same as the nonelastomeric fluorine-containing polymer chain segment in (b-2).

The fluorine-containing multi-segmented polymer (b-3) preferably comprises 40 to 95 % by weight of the elastomeric fluorine-containing polymer chain segment and 5 to 60 % by weight of the nonelastomeric fluorine-containing polymer chain segment.

It is important that the thermoplastic fluorine rubber (b) is a fluorine-containing multi-segmented polymer, in which the elastomeric fluorine-containing polymer chain segment and the nonelastomeric fluorine-containing polymer chain segment are bonded by blocking or grafting in each molecule.

From the viewpoint of heat resistance of the obtained thermoplastic fluorine rubber (b), the crystal melting point of the nonelastomeric fluorine-containing polymer chain segment is preferably at least 150°C, more preferably 200 to 360°C.

For the process for preparing the thermoplastic fluorine rubber (b), various known methods can be employed to obtain a fluorine-containing multi-segmented polymer by connecting the elastomeric segment and the nonelastomeric segment by blocking or grafting. Particularly, the process for preparing a block-type fluorine-containing multi-segmented polymer described in JP-B-58-4728 and the process for preparing a graft-type fluorine-containing multi-segmented polymer described in JP-A-62-34324 are preferably employed.

Particularly, from the viewpoint that a homogeneous and regular segmented polymer having high segmentation ratio (block ratio) can be obtained, preferable is the block-type fluorine-containing multi-segmented polymer synthesized by the iodine transfer polymerization method described in JP-B-58-4728 and KOBUNSHI RONBUNSHU Japanese Journal of Polymer Science and Technology (Vol. 49, No. 10, 1992).

In the case that a mere mixture of an elastomeric fluorine-containing polymer and a nonelastomeric fluorine-containing polymer is used, usually, mechanical properties (particularly in high temperatures) are insufficient and abrasion resistance, flexibility and durability decrease, although the effects differ according to the type, mixing properties and compatibility of the polymers that are mixed.

On the other hand, by preparing a multi-segmented polymer by bonding the elastomeric segment and the nonelastomeric segment by blocking or grafting, heat resistance and mechanical properties (particularly in high temperatures) are improved in comparison to a mere mixture of an elastomeric fluorine-containing polymer and a nonelastomeric fluorine-containing polymer.

The elastomeric fluorine-containing polymer segment can be prepared by the iodine transfer polymerization method, which is known as a process for preparing fluorine rubber. An example is the method of emulsion polymerizing perhalo olefin and when necessary, a monomer that gives a crosslinking site in the presence of an iodine compound, preferably a diiodine compound, in an aqueous medium under pressure while stirring in the presence of a radical initiator in a substantially oxygen-free atmosphere. Typical examples of the diiodine compound that is used are 1,3-diiodoperfluoropropane, 1,4-diiodoperfluorobutane, 1,3-diiodo-2-chloroperfluoropropane, 1,5-diiodo-2,4-dichloroperfluoropentane, 1,6-diiodoperfluorohexane, 1,8-diiodoperfluorooctane, 1,12-diiodoperfluorododecane, 1,16-diiodoperfluorohexadecane, diiodomethane and 1,2-diiodoethane. These compounds may be used alone or in combination with one another. Particularly, 1,4-diiodoperfluorobutane is preferable. The amount of the diiodine compound is 0.01 to 1 % by weight based on the total weight of the elastomeric fluorine-containing polymer chain segment.

The radical polymerization initiator used for preparing the elastomeric segment in the present invention can be an initiator that has been conventionally used for polymerization of a fluorine elastomer. Examples of such initiators are organic and inorganic peroxides and azo compounds. Typical initiators are persulfates, carbonate peroxides and ester peroxides and a preferable initiator is ammonium persulfate (APS). APS can be used alone or can be used in combination with reducing agents such as sulfites and sulfite salts.

The emulsifier used for emulsion polymerization can be selected from a wide range but from the viewpoint of inhibiting the chain transfer reaction to the emulsifier molecules that occurs during polymerization, salts of carboxylic acid having a fluorocarbon chain or a fluoropolyether chain are preferable. The amount of the emulsifier is preferably about 0.05 to 2 % by weight, more preferably 0.2 to 1.5 % by weight of the amount of water that is added.

The monomer mixed gas used in the present invention is explosive, as described by G. H. Kalb et al., in Advances in Chemistry Series, 129, 13 (1973), and therefore, the polymerization device must be designed so that sparks, which become the ignition source, are not generated. In light of this, the polymerization pressure is preferably kept as low as possible.

The polymerization pressure can be varied in a wide range and is usually within the range of 0.5 to 5 MPa. The higher the polymerization pressure is the higher the polymerization rate and therefore, from the viewpoint of improvement in productivity, the polymerization pressure is preferably at least 0.8 MPa.

The elastomeric fluorine-containing polymer chain segment obtained in this way preferably has number average molecular weight of 5,000 to 750,000, particularly 20,000 to 400,000, from the viewpoint of imparting flexibility, elasticity and mechanical properties to the entire fluorine-containing multi-segmented polymer.

The terminal of the elastomeric segment obtained in this way is a perhalo-type and has an iodine atom that is the initiation point for block copolymerization of the nonelastomeric segment.

Subsequently, block copolymerization of the nonelastomeric segment to the elastomeric fluorine-containing polymer chain segment can be conducted subsequent to emulsion polymerization of the elastomeric fluorine-containing polymer chain segment by changing the monomer to those for a nonelastomeric segment.

The number average molecular weight of the obtained nonelastomeric segment can be adjusted within a wide range of 1,000 to 1,200,000, preferably 3,000 to 600,000.

The thermoplastic fluorine rubber (b) obtained in this way is composed mainly of polymer molecules in which nonelastomeric fluorine-containing polymer chain segments are bonded to both sides of the elastomeric fluorine-containing polymer chain segment and polymer molecules in which a nonelastomeric fluorine-containing polymer chain segment is bonded to one side of the elastomeric fluorine-containing polymer chain segment. The amount of polymer molecules comprising elastomeric segments only, to which nonelastomeric segments are not bonded, is at most 20 % by weight, preferably at most 10 % by weight, based on the total amount of polymer molecules and segments in the fluorine-containing multi-segmented polymer.

In the present invention, a composition comprising the fluorine rubber (a) and the thermoplastic fluorine rubber (b) described above can be used.

The first fluorine rubber composition comprising the nonperfluoro fluorine rubber (a-1) and the fluorine-containing multi-segmented polymer (b-1) can be obtained by mixing the nonperfluoro fluorine rubber (a-1) and the fluorine-containing multi-segmented polymer (b-1) as a dispersion or in any ratio by dry blending with an open roll.

Also, in order to improve mold release properties when molding, additives such as an internal mold release agent can be added accordingly as long as the effects of the present invention are not lost. A crosslinking agent can be added depending on the type of the crosslinking method described below.

The second fluorine rubber composition comprising the nonperfluoro fluorine rubber (a-1) and the fluorine-containing multi-segmented polymer (b-2), the third fluorine rubber composition comprising the perfluoro fluorine rubber (a-2) and the fluorine-containing multi-segmented polymer (b-3), the fourth fluorine rubber composition comprising the perfluoro fluorine rubber (a-2) and the fluorine-containing multi-segmented polymer (b-2) and the fifth fluorine rubber composition comprising the perfluoro fluorine rubber (a-2) and the fluorine-containing multi-segmented polymer (b-1) can be obtained in the same manner as the first fluorine rubber composition.

The above additives can be added accordingly as long as the effects of the present invention are not lost and a crosslinking agent can be added depending on the type of the crosslinking method described below.

Both the perfluoro fluorine rubber (a-2) and the fluorine-containing multi-segmented polymer (b-1) are poor in crosslinking efficiency by radiation and substantially cannot be crosslinked by radiation. Therefore, to crosslink the fifth fluorine rubber composition, a crosslinking site by which peroxide crosslinking, for example, is made possible must be introduced into at least one of the rubber and then crosslinking is conducted.

As the fluorine rubber in which a crosslinking site is introduced, a fluorine rubber, in which iodine or bromine is introduced into the polymer terminal, is suitable. This fluorine rubber is obtained by introducing a compound represented by formula (7):

R²IₓBr_{y} (7)

(wherein x and y are respectively an integer of 0 to 2 and satisfy 1 ≤ x + y ≤ 2, R² is a saturated or unsaturated fluorohydrocarbon group or chlorofluorohydrocarbon group having 1 to 16 carbon atoms or a hydrocarbon group having 1 to 3 carbon atoms) when preparing by polymerization. The iodine or bromine that is introduced in this way functions as a crosslinking site.

Examples of compounds represented by formula (7) are 1,3-diiodoperfluoropropane, 1,3-diiodo-2-chloroperfluoropropane, 1,4-diiodoperfluorobutane, 1,5-diiodo-2,4-dichloroperfluoropentane, 1,6-diiodoperfluorohexane, 1,8-diiodoperfluorooctane, 1,12-diiodoperfluorododecane, 1,16-diiodoperfluorohexadecane, diiodomethane, 1,2-diiodoethane, 1,3-diiodo-n-propane, CF₂Br₂, BrCF₂CF₂Br, CF₃CFBrCF₂Br, CFClBr₂, BrCF₂CFClBr, CFBrClCFClBr, BrCF₂CF₂CF₂Br, 1-bromo-2-iodoperfluoroethane, 1-bromo-3-iodoperfluoropropane, 1-bromo-4-iodoperfluorobutane, 2-bromo-3-iodoperfluorobutane, 3-bromo-4-iodoperfluorobutene-1, 2-bromo-4-iodoperfluorobutene-1, monoiodomonobromo-substituted benzene, diiodomonobromo-substituted benzene and (2-iodoethyl) and (2-bromoethyl) substituted benzene.

Also, a compound such as BrCF₂CFBrOCF₃ can be used.

Of these, from the viewpoints of polymerization reactivity, crosslinking reactivity and availability, 1,4-diiodoperfluorobutane and diiodomethane are preferably used.

The amount of the compound represented by formula (7) is 0.0001 to 5 % by weight, preferably 0.01 to 1 % by weight of the total weight of the obtained fluorine rubber.

An example of another method for introducing the crosslinking site is the method of copolymerizing a small amount of a monomer that gives a crosslinking site. As the monomer that gives a crosslinking site, the same monomers as those given above can be used.

Examples of the silicone elastomer are silicone rubber and fluorosilicone rubber.

In the present invention, a perfluoro elastomer is preferably used as the crosslinkable elastomer from the viewpoint of heat resistance. As such a perfluoro elastomer, perfluoro fluorine rubber (a-2) is particularly preferable.

In the crosslinkable elastomer composition of the present invention, the amount of the carbon fluoride filler is preferably 1 to 50 parts by weight, more preferably 1 to 20 parts by weight based on 100 parts by weight of the crosslinkable elastomer. When the amount of the carbon fluoride filler is less than 1 part by weight based on 100 parts by weight of the crosslinkable elastomer, the effect as a filler is hardly exhibited and when the amount is more than 50 parts by weight, the composition has extremely high hardness that the crosslinkable elastomer composition of the present invention is unfavorable for use as a sealing material.

When a metal compound inorganic filler and/or an organic polymer compound filler is compounded to the crosslinkable elastomer composition of the present invention, the amount of the metal compound inorganic filler and/or organic polymer compound filler is preferably 1 to 30 parts by weight, more preferably 1 to 15 parts by weight, more preferably 5 to 15 parts by weight, based on 100 parts by weight of the crosslinkable elastomer. When the amount of the filler is within the above range, a molded article can be obtained, which has smaller change in weight in any of high concentration F radical irradiation, O₂ plasma irradiation and F plasma irradiation than in the conventional. Furthermore, a molded article having better mechanical strength can be obtained.

To the crosslinakble elastomer composition of the present invention, a crosslinking agent can be added when necessary.

The crosslinking agent that is compounded to the crosslinkable elastomer composition of the present invention can be selected accordingly depending on the type of crosslinkable groups (cure sites) of the crosslinkable elastomer.

The crosslinking reaction can be conducted in a peroxide crosslinking system, polyol crosslinking system, polyamine crosslinking system, triazine crosslinking system, oxazole crosslinking system, imidazole crosslinking system, thiazole crosslinking system and radiation crosslinking system.

The crosslinking agent used in peroxide crosslinking is an organic peroxide that can easily produce peroxy radical in the presence of heat or an oxidization-reduction system. Examples are 1,1-bis(t-butylperoxy)-3,5,5-trimethylcyclohexane, 2,5-dimethylhexane-2,5-dihydroperoxide, di-t-butylperoxide, t-butylcumylperoxide, dicumylperoxide, α,α-bis(t-butylperoxy)-p-diisopropylbenzene, 2,5-dimethyl-2,5-di(t-butylperoxy)hexane, 2,5-dimethyl-2,5-di(t-butylperoxy)-hexyne-3, benzoylperoxide, t-butylperoxybenzene, 2,5-dimethyl-2,5-di(benzoylperoxy)hexane, t-butylperoxy maleate and t-butylperoxyisopropyl carbonate. Of these dialkyl types are preferable. Furthermore, 2,5-dimethyl-2,5-di(t-butylperoxy)hexane is particularly preferable. Usually, the type and amount of the organic peroxide is selected in consideration of the amount of active -O-O- and decomposition temperature.

The crosslinking aid that can be used in the above case is a compound that has reaction activity to peroxy radical and polymer radical. Examples are multifunctional compounds having a functional group such as CH₂ = CH-, CH₂ = CHCH₂- and CF₂ = CF-. Specific examples are triallyl cyanurate, triallyl isocyanurate (TAIC), triacrylformal, triallyl trimellitate, N,N'-n-phenylenebismaleimide, dipropargyl terephthalate, diallyl phthalate, tetraallylterephthalateamide, triallyl phosphate, bismaleimide, fluorinated triallyl isocyanurate (1,3,5-tris(2,3,3-trifluoro-2-propenyl)-1,3,5-triazine-2,4,6-trione), tris(diallylamine)-S-triazine, triallyl phosphite, N,N-diallylacrylamide and 1,6-divinyldodecafluorohexane.

Examples of the crosslinking agent used for polyol crosslinking are polyol compounds such as bisphenol A and bisphenol AF.

Examples of the crosslinking agent used for polyamine crosslinking are polyvalent amine compounds such as hexamethylenediamine carbamate, N,N'-dicinnamylidene-1,6-hexanediamine and 4,4'-bis(aminocyclohexyl)methane carbamate.

Examples of the crosslinking agent used for triazine crosslinking are organic tin compounds such as tetraphenyl tin and triphenyl tin.

Examples of the crosslinking agent used for oxazole crosslinking, imidazole crosslinking and thiazole crosslinking are a bisdiaminophenyl crosslinking agent, a bisaminophenol crosslinking agent, a bisaminothiophenol crosslinking agent, represented by formula (8): 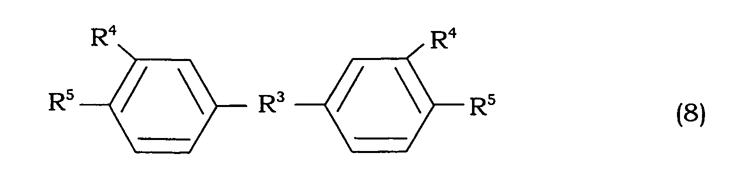 (wherein R³ is -SO₂-, -O-, -CO-, an alkylene group having 1 to 6 carbon atoms, a perfluoroalkylene group having 1 to 10 carbon atoms or a single bond, one of R⁴ and R⁵ is -NH₂ and the other is -NH₂, -OH or -SH, preferably both R⁴ and R⁵ are -NH₂), a bisamidrazone crosslinking agent represented by formula (9): 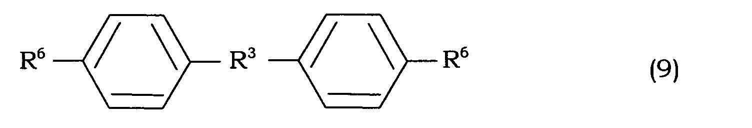 wherein R³ is the same as above and 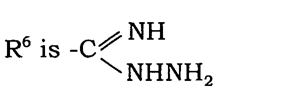 or 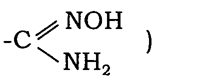 and a bisamidoxime crosslinking agent represented by formula (10) or (11): 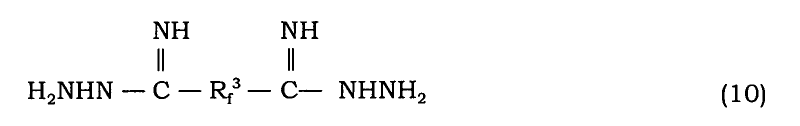 (wherein R_{f}³ is a perfluoroalkylene group having 1 to 10 carbon atoms), 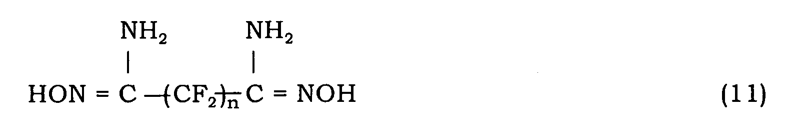 (wherein n is an integer of 1 to 10). These bisaminophenol crosslinking agents, bisaminothiophenol crosslinking agents and bisdiaminophenyl crosslinking agents have conventionally been used in crosslinking systems wherein the crosslinking site is a cyano group, but also react with a carboxyl group and an alkoxycarbonyl group and form an oxazole ring, thiazole ring and an imidazole ring to give a crosslinked article.

Particularly preferably crosslinking agents are compounds having several 3-amino-4-hydroxyphenyl groups, 3-amino-4-mercaptophenyl groups and 3,4-diaminophenyl groups represented by the formula (12): 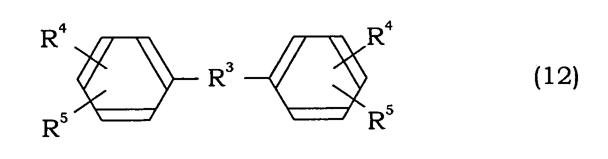 (wherein R³, R⁴ and R⁵ are the same as above) and specific examples are 2,2-bis(3-amino-4-hydroxyphenyl)hexafluoropropane (generic name: bis(aminophenol)AF), 2,2-bis(3-amino-4-mercaptophenyl)hexafluoropropane, tetraaminobenzene, bis-3,4-diaminophenylmethane, bis-3,4-diaminophenylether and 2,2-bis-(3,4-diaminophenyl)hexafluoropropane.

In the above crosslinkling system, usually, the amount of the crosslinking agent is 0.05 to 10 parts by weight, preferably 1 to 5 parts by weight, based on 100 parts by weight of the crosslinkable elastomer. When the amount is less than 0.05 part by weight, the crosslinkable elastomer may not be crosslinked sufficiently and when the amount is more than 10 parts by weight, the properties of the crosslinked article tend to become poor.

For uses in which non-contaminating properties are strongly desired such as semiconductor manufacturing equipment, high energy crosslinking is preferably conducted without adding a crosslinking agent.

When crosslinking by radiation, as a compounding agent for crosslinking by radiation, the same compounds as those used for a crosslinking aid in peroxide crosslinking can be compounded. The amount is preferably 0.1 to 10 parts by weight, more preferably 0.3 to 5 parts by weight based on 100 parts by weight of the polymer.

In crosslinking by radiation, the crosslinkbale elastomer composition containing a crosslinkable elastomer and a carbon fluoride filler are molded into the desired shape and thereafter irradiated by ionizing radiation which has sufficient high energy to permeate into the molded article, such as X-rays, α-rays, β-rays, γ-rays, electron beams, proton beams, deuteron rays and ultraviolet rays. Irradiation can be conducted in the presence of air, nitrogen, argon or helium or in vacuum. From the viewpoint of preventing oxidization and degradation of the surface of the molded article, irradiation is preferably conducted under nitrogen, argon or helium, which are inert gases, more preferably in vacuum.

As the ionizing radiation machine, those conventionally used can be used.

When the crosslinkable elastomer composition of the present invention is used as a coating material, a crosslinking aid such as a multifunctional co-crosslinking agent can also be used. Examples of the multifunctional co-crosslinking agent are the same compounds as those used for a crosslinking aid in peroxide crosslinking.

The amount of the crosslinking aid is usually 0.1 to 10 parts by weight, preferably 0.5 to 5 parts by weight based on 100 parts by weight of the crosslinkable elastomer. When the content of the crosslinking aid is less than 0.1 part by weight, the crosslinkable elastomer may not sufficiently be crosslinked and when the amount is more than 10 parts by weight, elongation of the crosslinked article tends to decrease.

In the present invention, in fields in which high purity and non-contaminating properties are not particularly required, additives that are usually compounded in a crosslinkable elastomer composition, such as a filler, a processing aid, a plasticizer and a colorant, can be compounded when necessary. At least one type of a commonly used crosslinking agent and a crosslinking aid that differ from those described above may also be compounded.

The crosslinkable elastomer composition of the present invention can be prepared by mixing the above components such as the crosslinkable elastomer and carbon fluoride filler and also, when necessary, the metal compound inorganic filler and/or organic polymer compound filler and the crosslinking agent using the usual elastomer processing machine such as an open roll, a Banbury mixer and a kneader. The composition can also be prepared by the method of using an internal mixer and the method of co-coagulating from an emulsion mixture.

The crosslinkable elastomer composition of the present invention is useful as molding material for various molded articles or as coating material for various elastomeric molded articles. Particularly, the crosslinkable elastomer composition of the present invention is used for molded articles for plasma process in semiconductor manufacturing processes.

The method for obtaining a pre-molded article using the crosslinkable elastomer composition of the present invention can be the usual method and known methods such as the method of heat compressing in a metal die, the method of injecting into a heated metal die and the method of extruding with an extruder can be employed. Extruded products such as a hose and electric wire can maintain its form after extrusion and therefore, the extruded pre-molded article can be used as it is without using a crosslinking agent. A pre-molded article using a crosslinking agent and subjected to heat crosslinking by steam can also be used. Also, in the case that maintaining the shape of a molded article such as an O-ring is difficult in an uncrosslinked state after mold-releasing, the article can maintain the shape by using a pre-molded article that is crosslinked in advance using a crosslinking agent.

When conducting peroxide crosslinking, crosslinking can be conducted under the usual crosslinking conditions of a crosslinkable elastomer. For example, press crosslinking is conducted by placing the elastomer in a metal die and holding under applied pressure at 120 to 200°C for 1 to 60 minutes and subsequently, oven crosslinking is conducted by holding in an oven of 120 to 250°C for 0 to 48 hours, to obtain a crosslinked article.

When conducting oxazole crosslinking using a crosslinking agent such as bisaminophenol, crosslinking can be conducted under the usual crosslinking conditions of a crosslinkable elastomer. For example, press crosslinking is conducted by placing the elastomer in a metal die and holding under applied pressure at 120 to 250°C for 1 to 60 minutes and subsequently, oven crosslinking is conducted by holding in an oven of 120 to 320°C for 0 to 48 hours, to obtain a crosslinked article. Also, for example, bis(aminophenol)AF can be used together by adding in compounds of known crosslinking methods of crosslinkable elastomers such as polyamine crosslinking, polyol crosslinking and peroxide crosslinking.

Imidazole crosslinking wherein a carboxyl group is crosslinked with a bisdiaminophenyl crosslinking agent is most suitable for a carboxyl-containing polymer, which has a carboxyl group in an area other than the terminal, and gives a crosslinked article having favorable properties at a relatively low crosslinking temperature (for example 150 to 230°C, preferably 170 to 200°C).

For uses in which non-contaminating properties are strongly desired such as semiconductor manufacturing equipment, high-energy crosslinking is preferably conducted without using a crosslinking agent. As the crosslinking source, X-rays, α-rays, β-rays, γ-rays, electron beams, proton beams, deuteron rays and ultraviolet rays are used. In such a case, the irradiation amount is preferably 0.1 to 50 Mrad. The irradiation temperature is preferably 20 to 100°C. Irradiation can be conducted in the presence of air, nitrogen, argon or helium or in vacuum. From the viewpoint of preventing oxidization and degradation of the surface of the molded article, irradiation is preferably conducted under nitrogen, argon or helium, which are inert gases, more preferably in vacuum.

The crosslinkable elastomer composition and the molding material of the present invention can be crosslinked and molded to obtain the molded article of the present invention. Furthermore, the elastomeric molded article can be coated with the above coating material using the crosslinkable elastomer composition of the present invention and then crosslinked to obtain a coated molded article.

As the elastomeric molded article that is to be coated, articles made of various elastomeric materials can be used and from the viewpoint of heat resistance, fluorine elastomers and silicone elastomers are preferably used.

The molded articles and coated molded articles of the present invention are useful as various molded articles in the fields shown below in Tables 1 to 3.

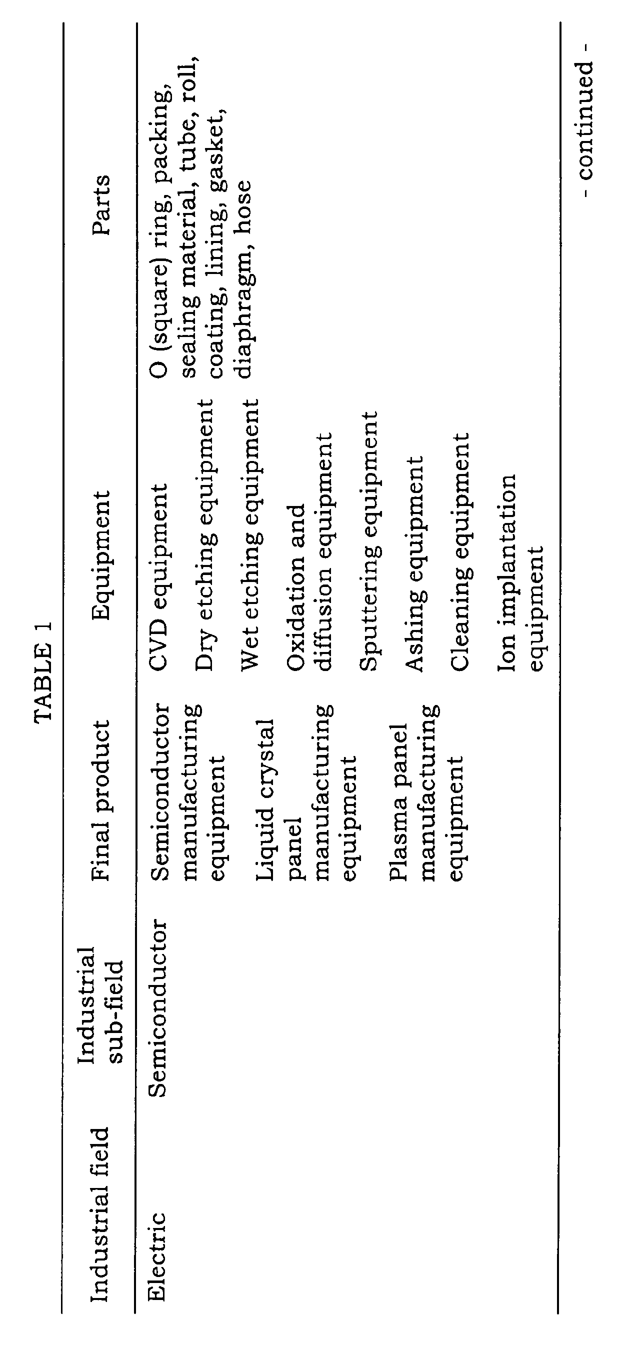

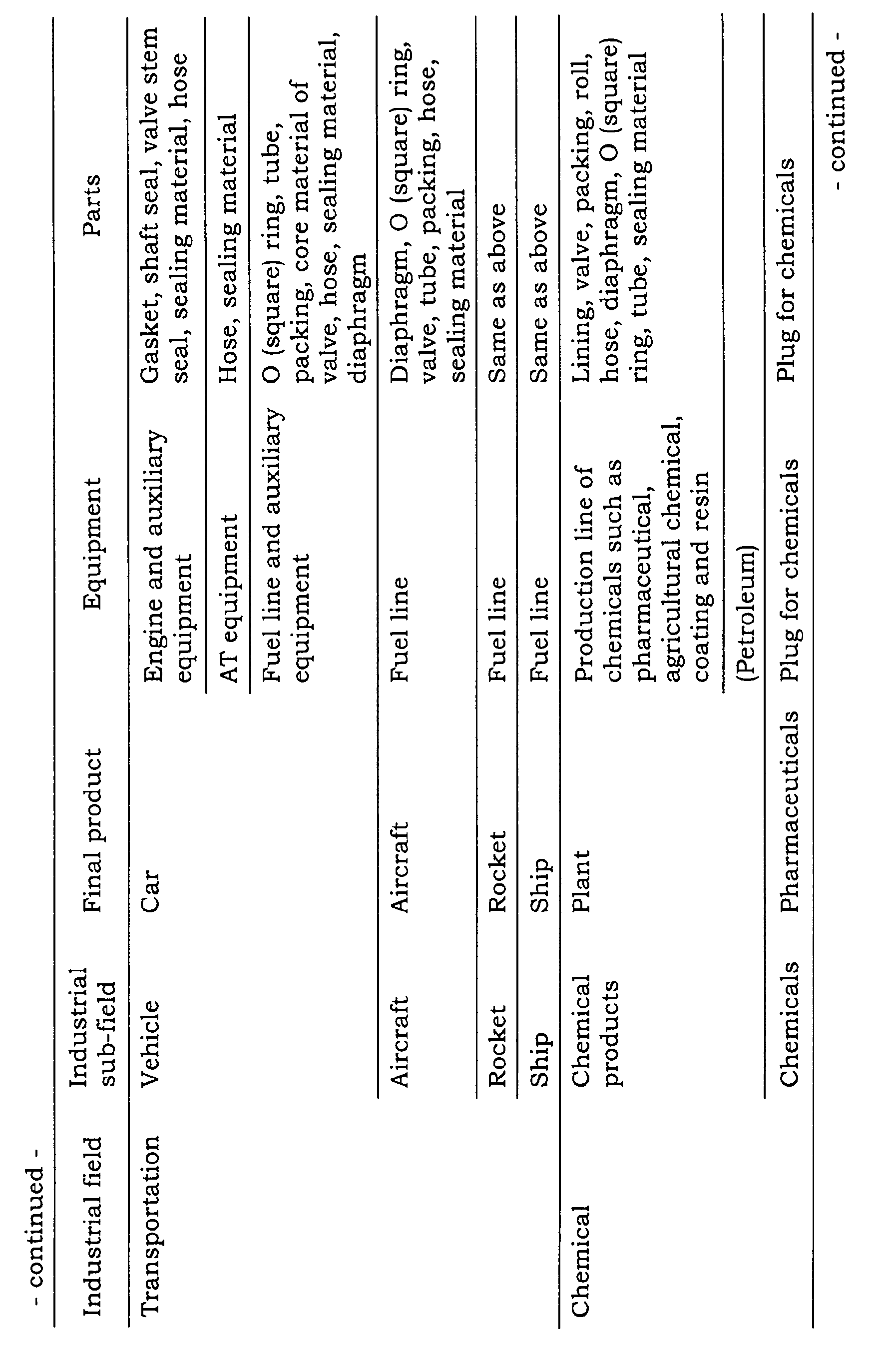

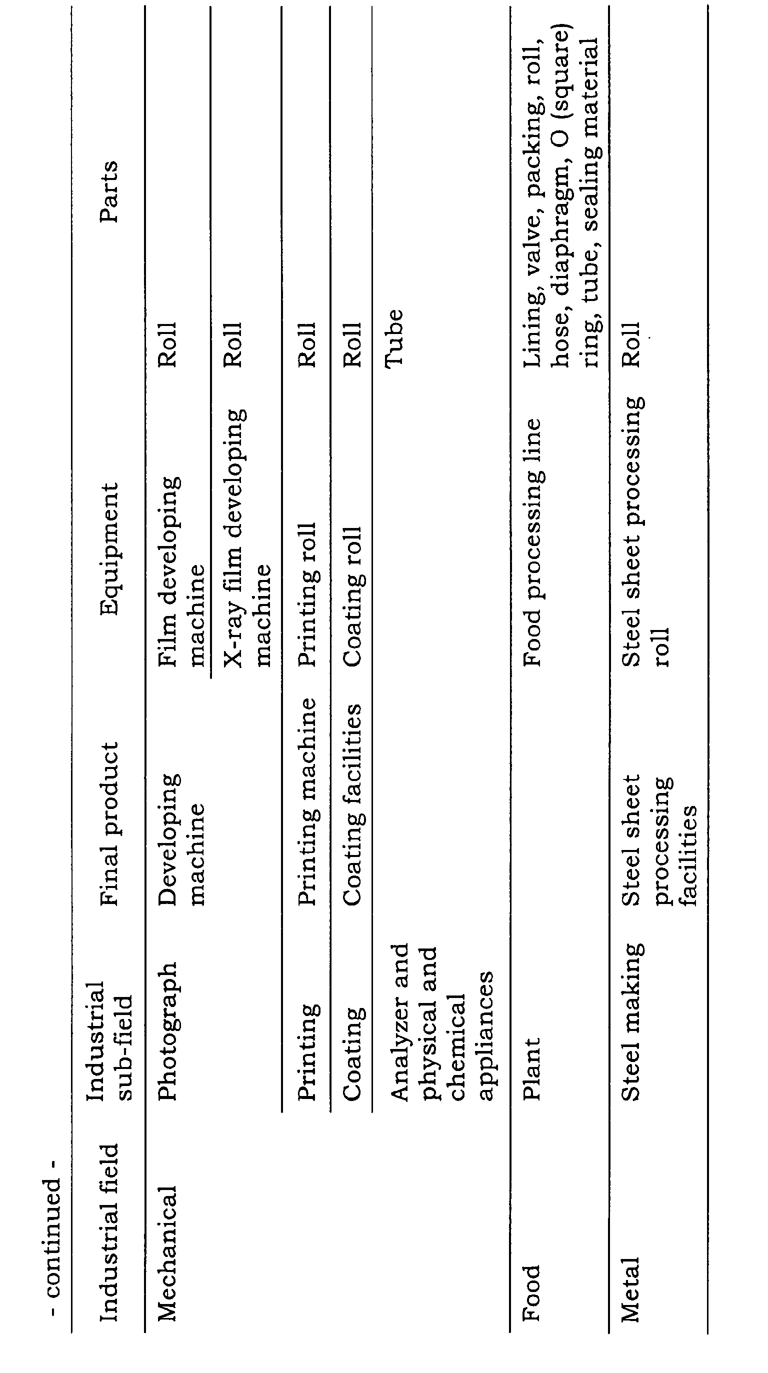

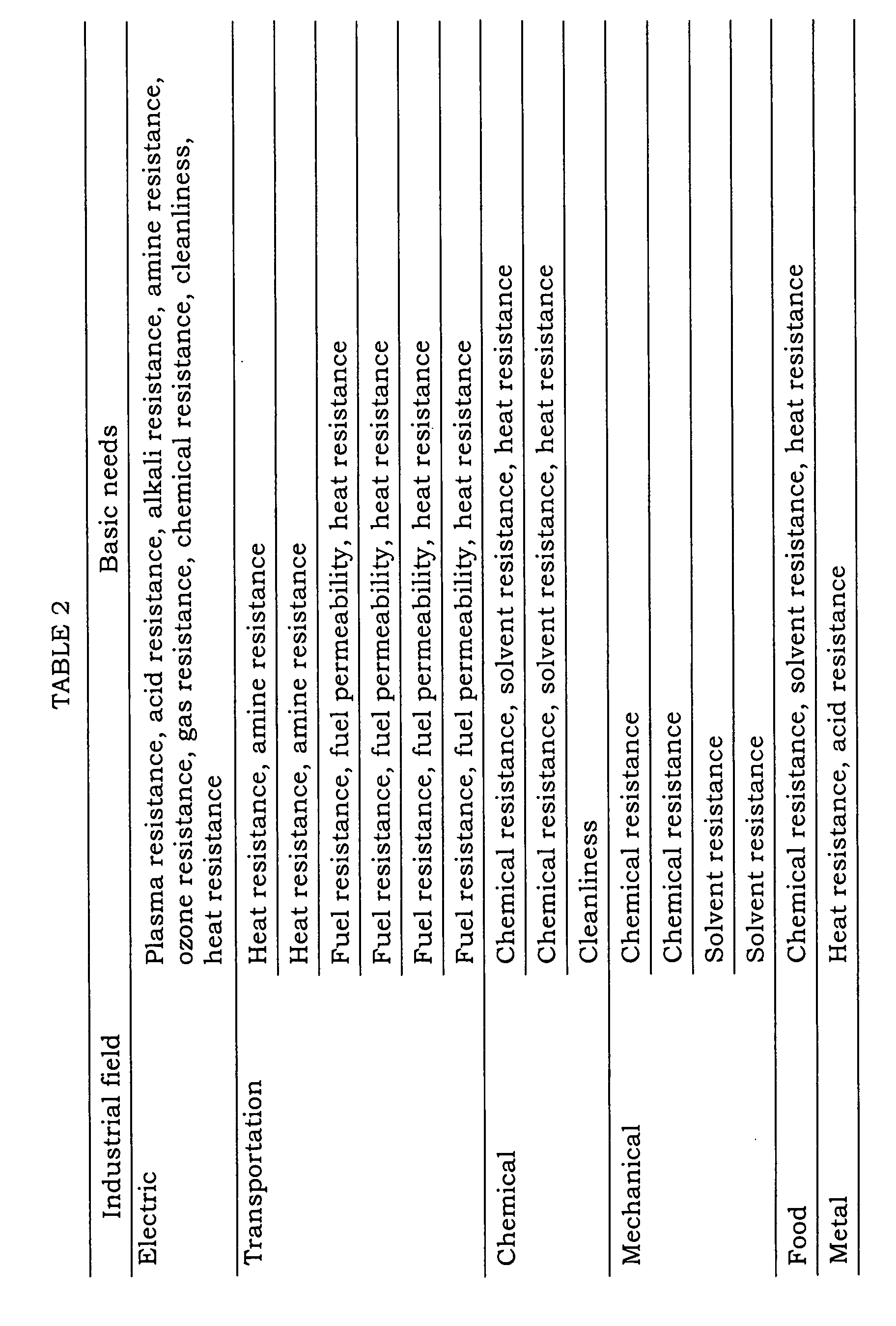

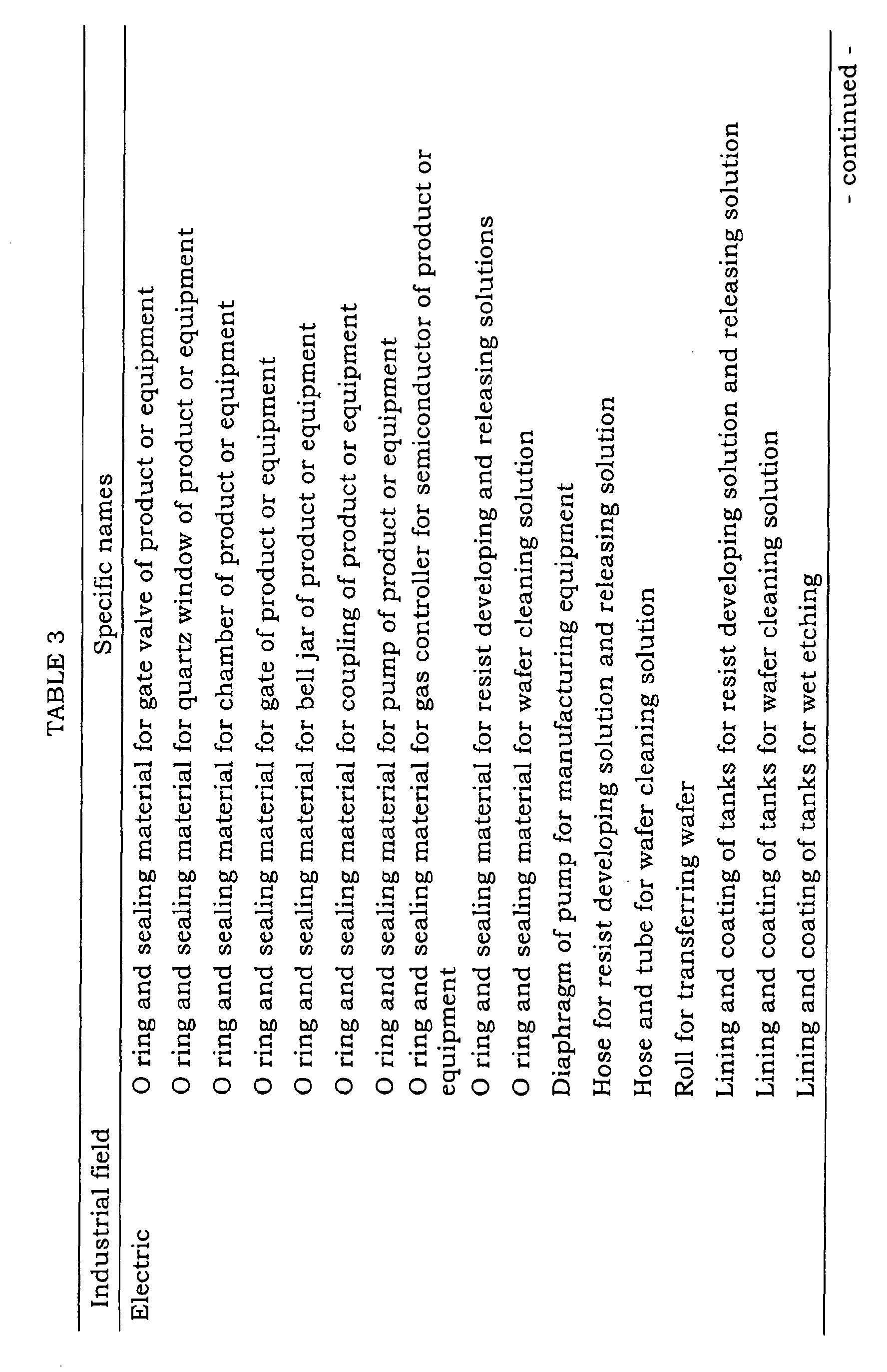

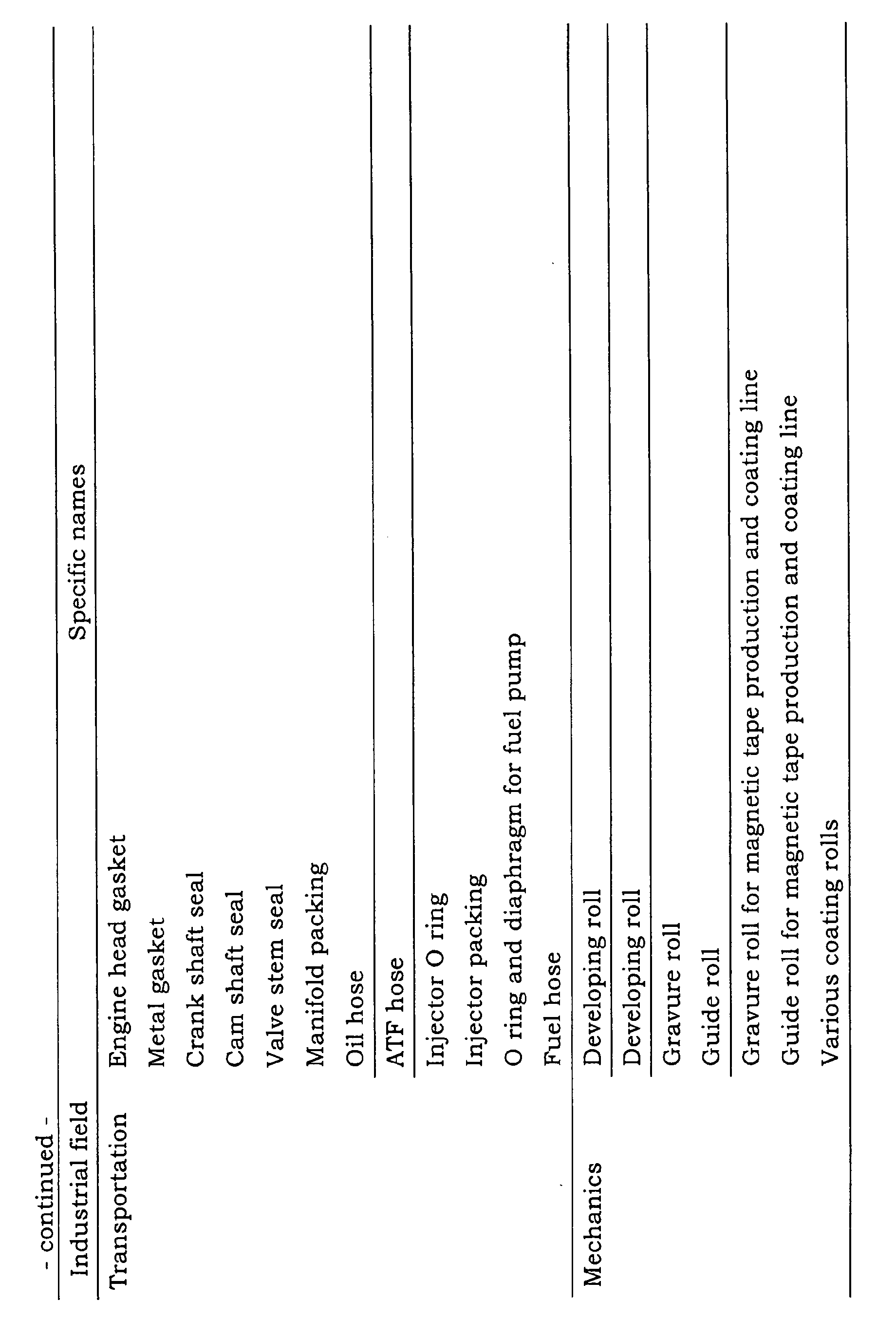

Specifically, the molded articles can be used in the following semiconductor manufacturing equipment.
(1) Etching system
   Dry etching equipment
   Plasma etching machine
   Reactive ion etching machine
   Reactive ion beam etching machine
   Sputter etching machine
   Ion beam etching machine
   Wet etching equipment
   Ashing equipment
(2) Cleaning system
   Dry etching cleaning equipment
   UV/O₃ cleaning machine
   Ion beam cleaning machine
   Laser beam cleaning machine
   Plasma cleaning machine
   Gas etching cleaning machine
   Extractive cleaning equipment
   Soxhlet extractive cleaning machine
   High temperature high pressure extractive cleaning machine
   Microwave extractive cleaning machine
   Supercritical extractive cleaning machine
(3) Exposing system
   Stepper
   Coater and developer
(4) Polishing system
   CMP equipment
(5) Film forming system
   CVD equipment
   Sputtering equipment
(6) Diffusion and ion implantation system
   Oxidation and diffusion equipment
   Ion implantation equipment

The present invention exhibits excellent properties as sealing material for equipment in which plasma treatment, such as NF₃ plasma treatment, O₂ plasma treatment and fluorine plasma treatment, is conducted, including CVD equipment, plasma etching machines, reactive ion etching machines, ashing equipment and excimer laser exposing machines.

Hereinafter, the present invention is explained based on Examples and Comparative Examples, but the present invention is not limited thereto.

### REFERENCE EXAMPLE 1

### (Preparation process of carbon fluoride)

A monel box reaction vessel was evenly lined with 200 g of acetylene black (available from Denki Kagaku Kogyo K.K., number average particle size: 0.04 µm) and while flowing nitrogen gas, was heated to 400°C. Fluorine gas was flowed at 400 ml/ min and nitrogen gas was flowed at 3600 ml/min for 10 hours to react and immediately after the reaction, the inside of the reaction vessel was replaced with nitrogen gas. While flowing nitrogen gas, the temperature was cooled to room temperature and the reactant was retrieved. Polycarbon monofluoride having F/C of 1.0 was obtained.

### EXAMPLE 1

A tetrafluoroethylene/perfluoro(methyl vinyl ether) copolymer (67 % by mol/33 % by mol) in which iodine is introduced into the terminal, Perhexa 2.5B (available from NOF Corporation), triallyl isocyanurate (TAIC) (available from Nippon Kasei Chemical Co., Ltd.) and, as a filler, the polycarbon monofluoride obtained in Reference Example 1 were mixed in a weight ratio of 100/1/2/15 and then kneaded by an open roll to obtain a crosslinkable fluorine elastomer composition.

The obtained fluorine elastomer composition was crosslinked for 10 minutes at 160°C and then subjected to oven crosslinking for 4 hours in a 180°C air oven, to obtain an AS-568-214 size molded article.

The obtained molded article was subjected to plasma irradiation treatment under the following conditions and the weight before and after irradiation was measured to find the change in weight. The results are shown in Table 4.

### (1) Test of resistance to high-density F radical cleaning

Plasma irradiation device: ASTRON fluorine atom generator (made by ASTEX)
SiO₂ etching rate: SiO₂ etching rate is 1590 Å/min under NF₃/Ar 500 SSCM, pressure of 5 Torr and temperature of 100°C.
Irradiation conditions:
   NF₃/Ar: 1SLM/1SML
   Pressure: 5 Torr
   Irradiation temperature: 200°C
   Irradiation time: 2 hours
Weight measurement: Measurement was conducted to 0.01 mg using an electronic analysis scale 2006 MPE made by Sertorious GMBH and the 0.01 mg column was rounded off.

Three samples of each kind were used and the average value of rate of decrease in weight was calculated.

### (2) High density O₂ plasma resistance test

Plasma irradiation device: ICP high density plasma machine (made by Samco International)
Irradiation conditions:
   O₂: 16 SCCM
   Pressure: 20 mTorr
   Power: 800 W
   Irradiation time: 30 minutes

### (3) High density CF₄ plasma resistance test

Plasma irradiation device: ICP high density plasma machine (made by Samco International)
Irradiation conditions:
   CF₄: 16 SCCM
   Pressure: 20 mTorr
   Power: 800 W
   Irradiation time: 30 minutes

### EXAMPLE 2

The experiment was conducted in the same manner as in Example 1, except that the polycarbon monofluoride of Example 1 was thermally treated in advance at 350°C for 2 hours.

### EXAMPLE 3

The experiment was conducted in the same manner as in Example 1, except that a tetrafluoroethylene/perfluoro(methyl vinyl ether) copolymer (67 % by mol/ 33 % by mol) in which iodine is introduced into the terminal, Perhexa 2.5B (available from NOF Corporation), triallyl isocyanurate (TAIC) (available from Nippon Kasei Chemical Co., Ltd.), polycarbon monofluoride (thermally treated in advance at 350°C for 2 hours) as a filler and a scaly resin having the following structure (specific surface area 2 m²/g) were mixed in a weight ratio of 100/1/2/10/5.

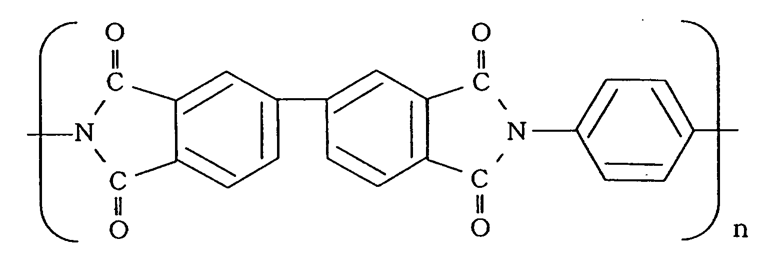

### EXAMPLE 4

The experiment was conducted in the same manner as in Example 3, except that silica (available from Cabot, CAB-O-SIL M-7D: average particle size 0.02 µm) was used instead of the resin filler.

### COMPARATIVE EXAMPLE 1

The experiment was conducted in the same manner as in Example 1, except that θ-alumina (available from Sumitomo Chemical Co., Ltd., AKP-G008) was used instead of polycarbon monofluoride.

### COMPARATIVE EXAMPLE 2

The experiment was conducted in the same manner as in Example 3, except that the resin having the structure shown in Example 3 was used instead of polycarbon monofluoride.

### COMPARATIVE EXAMPLE 3

The experiment was conducted in the same manner as in Example 1, except that silica (available from Cabot, CAB-O-SIL M-7D: average particle size 0.02 µm) was used instead of polycarbon monofluoride.

### COMPARATIVE EXAMPLE 4

The experiment was conducted in the same manner as in Example 1, except that carbon black (available from Cancarb Limited, N-990) was used instead of polycarbon monofluoride.

**TABLE 4**

| Rate of weight change after plasma irradiation (% by weight) | | | |
|---|---|---|---|
| | High density F radical | O₂ plasma | CF₄ plasma |
| Ex. 1 | 0.23 | 1.56 | 1.88 |
| Ex. 2 | 0.21 | 1.35 | 1.69 |
| Ex. 3 | 0.22 | 1.69 | 2.28 |
| Ex. 4 | 0.23 | 1.55 | 2.88 |
| Com. Ex. 1 | 6.89 | 0.92 | 1.08 |
| Com. Ex. 2 | 0.23 | 2.59 | 2.88 |
| Com. Ex. 3 | 0.52 | 1.68 | 4.95 |
| Com. Ex. 4 | 0.27 | 3.63 | 2.88 |

As evident from Table 4, the weight decreases largely in a composition containing alumina as a filler (Comparative Example 1) by high-density F radical irradiation, in a composition containing only a resin filler (Comparative Example 2) by O₂ plasma irradiation, in a composition containing only a silica filler (Comparative Example 3) by fluorine plasma irradiation and in a composition containing carbon black (Comparative Example 4) by O₂ plasma irradiation. On the other hand, the crosslinkable elastomer composition of the present invention has extremely small weight decrease in all of high-density F radical irradiation, O₂ plasma irradiation and fluorine plasma irradiation and exhibits excellent plasma resistance.

### INDUSTRIAL APPLICABILITY

According to the present invention, a crosslinkable elastomer composition can be obtained, in which the change in weight in all of high-density F radical irradiation, O₂ plasma irradiation and fluorine plasma irradiation is small. Consequently, the crosslinkable elastomer composition of the present invention is used as a molded article such as a sealing material for sealing in semiconductor manufacturing equipment in which an extremely large variety of plasma treatments are conducted.

## Claims

1. A crosslinkable elastomer composition for plasma process comprising a crosslinkable elastomer and a carbon fluoride filler.

2. The crosslinkable elastomer composition of Claim 1, which further comprises a silicic compound inorganic filler and/or a filler comprising a synthetic polymer having a thermally and chemically stable aromatic ring in the main chain.

3. The crosslinkable elastomer composition of Claim 2, wherein said synthetic polymer having a thermally and chemically stable aromatic ring in the main chain is a synthetic polymer having an amide bond or an imide bond in the main chain.

4. The crosslinkable elastomer composition of Claim 2, wherein said silicic compound inorganic filler has average particle size of at most 0.5 µm.

5. The crosslinkable elastomer composition of Claim 2, wherein said filler comprising a synthetic polymer having a thermally and chemically stable aromatic ring in the main chain has specific surface area of at least 0.5 m²/g.

6. The crosslinkable elastomer composition of Claim 1, 2, 3, 4 or 5, wherein said carbon fluoride filler is heat treated at 300 to 550°C in advance.

7. The crosslinkable elastomer composition of Claim 1, 2, 3, 4, 5 or 6, wherein said crosslinkable elastomer is a perfluoro elastomer.

8. A molded article for plasma process comprising the crosslinkable elastomer composition of Claim 1, 2, 3, 4, 5, 6 or 7.

9. A sealing material for plasma process comprising the crosslinkable elastomer composition of Claim 1, 2, 3, 4, 5, 6 or 7.
